# EUROPÄISCHE PATENTSCHRIFT

(11) **EP 1 284 307 B1**
(45) Veröffentlichungstag und Bekanntmachung des Hinweises auf die Patenterteilung: **27.09.2006**
(21) Anmeldenummer: 02025558.4
(22) Anmeldetag: 09.04.1998
(51) Int. Cl.: C23C 18/12, C03C 1/00

(54) **Verfahren zum Versehen einer metallischen Oberfläche mit einer glasartigen Schicht**
Method for providing a metal surface with a vitreous layer
Procédé pour munir une surface métallique d'une couche vitreuse

(30) Priorität: 10.04.1997 DE 19714949
(43) Veröffentlichungstag der Anmeldung: 19.02.2003
(62) Teilanmeldung aus: 98922674.1
(73) Patentinhaber: Leibniz-Institut für Neue Materialien gemeinnützige GmbH, 66123 Saarbrücken (DE)
(72) Erfinder: Mennig, Martin, 66287 Quierschied (DE); Jonschker, Gerhard, 66583 Spiesen-Elversberg (DE); Schmidt, Helmut, 66130 Saarbrücken-Güdingen (DE)
(74) Vertreter: Barz, Peter

(56) Entgegenhaltungen:
- EP-A- 0 327 311
- WO-A-95/13249
- CHEMICAL ABSTRACTS, vol. 124, no. 2, 8. Januar 1996 (1996-01-08) Columbus, Ohio, US; abstract no. 11139, KOJIMA, HIROSHI ET AL: "Silicate-based coatings with excellent resistance to staining by food" XP002072046 & JP 07 228840 A (UBE INDUSTRIES, JAPAN) 29. August 1995 (1995-08-29)
- CHEMICAL ABSTRACTS, vol. 113, no. 22, 26. November 1990 (1990-11-26) Columbus, Ohio, US; abstract no. 193572, KURAMOTO, SHIGEFUMI ET AL: "Fine silica sphere-containing alkoxysilane coatings" XP002072047 & JP 02 097581 A (NIPPON SHOKUBAI KAGAKU KOGYO CO., LTD., JAPAN) 10. April 1990 (1990-04-10)

## Beschreibung

Die vorliegende Erfindung betrifft ein Verfahren zum Versehen einer metallischen Oberfläche mit einer glasartigen Schicht.

Glasartige Schichten auf zum Beispiel Stählen werden in der Regel über Emaillierungsprozesse hergestellt. Zu diesem Zweck wird eine Haftschicht und anschließend daran über eine Suspension (Engobe) eine partikelhaltige Zusammensetzung aufgetragen, die beim Erhitzen zu einem Glas aufschmilzt. In der Regel handelt es sich hierbei um bleihaltige Glassysteme (zwecks Erniedrigung des Schmelzpunktes), die durch einen relativ hohen Alkaligehalt gekennzeichnet sind, der dazu dient, den Ausdehnungskoeffizienten des Glases demjenigen des Stahls anzupassen. Dies hat aber auch den Nachteil, daß die resultierenden Emailschichten in ihrer chemischen Beständigkeit meistens nicht voll zufriedenstellend sind. Um geschlossene dichte Schichten zu erhalten, müssen die Schichtdicken in der Regel über 50 µm liegen. Dadurch werden die Schichten unflexibel und spröde und sind dadurch gegenüber Biegen, Schlag und Stoß empfindlich (platzen ab). Eine andere Methode ist das galvanische Abscheiden von Chromoxidinterferenzschichten. Diese Schichten sind jedoch nicht kratzfest und wegen ihrer Interferenzfarbwirkung sehr empfindlich in Bezug auf Verschmutzung und Fingerabdrücke.

Es wurden viele Untersuchungen bezüglich des Auftragens dünner Schichten auf Stahloberflächen über Sol-Gel-Techniken durchgeführt. So wurde zum Beispiel versucht, Zirkondioxid-Schichten zwecks Verbesserung der Korrosionsbeständigkeit auf Edelstahloberflächen vorzusehen. Borosilikatglas-Schichten wurden ebenfalls untersucht. Es zeigte sich jedoch, daß die refraktären Systeme (hochschmelzende Oxide wie ZrO₂) über diese Techniken nicht zu dichten Schichten führten und daß die Borosilikatglas-Schichten nur in Schichtdicken deutlich unter 1 µm auftragbar waren, so daß ein ausreichender mechanischer und chemischer Schutz nicht gewährleistet werden könnte.

JP-A-7-228840 beschreibt gemäß Chemical Abstracts, Bd. 124, Nr. 2, Abstrakt Nr. 11139 ein Verfahren zum Beschichten von Innenwänden für Mikrowellenöfen. In einem Beispiel werden NaNO₃, MeSi(OMe)₃, (EtO)₄Si und kolloidales Silica zusammen in PrOH gemischt. Diese Zusammensetzung wird auf Aluminium aufgetragen und bei einer Temperatur von 250°C wärmebehandelt.

Erfindungsgemäß wurde nun gefunden, daß unter Verwendung spezieller, organisch modifizierter Systeme auf SiO₂-Basis glasartige Schichten auf metallischen Oberflächen herstellbar sind, deren Dicke bis zu 10 µm betragen kann, ohne daß bei der Trocknung und beim Verdichten Rißbildung auftritt. Dieser Effekt wird dem verbesserten Relaxationsverhalten der organisch modifizierten Kieselgel- bzw. Kieselsäuregerüste zugeschrieben. Überraschenderweise hat sich auch herausgestellt, daß solche Schichten schon bei relativ niedrigen Temperaturen (in der Regel ab 400°C) in dichte SiO₂-Filme (zum Beispiel auf Edelstahl- oder Stahloberflächen) umgewandelt werden können. Derartige Filme sind in der Regel 3 bis 5 µm dick und bilden eine hermetisch abschließende Schicht, die auch bei höheren Temperaturen den Sauerstoffzutritt an die metallische Oberfläche verhindert bzw. drastisch reduziert und einen hervorragenden Korrosionsschutz gewährleistet. Außerdem sind derartige Schichten abriebfest, so daß zum Beispiel mit Stahlwolle auf deren Oberfläche gerieben werden kann, ohne daß Spuren hinterlassen werden. Auch nach 1000 Zyklen Taber-Abrader-Test (CS-10F, 500 g) zeigen sich nur kaum sichtbare Spuren. Darüber hinaus sind sie flexibel, d.h. Biegungen oder Abknickungen der Oberfläche führen zu keinerlei Rissen oder anderweitigen Beeinträchtigungen der Schichten.

Weiter sind die Schichten in der Regel glasklar und transparent und können so aufgetragen werden, daß die metallische Oberfläche in ihrem Aussehen nicht verändert wird. So ist es zum Beispiel möglich, auf Edelstahlbauteilen derartige Schichten aufzutragen, ohne daß eine Veränderung des Aussehens eintritt.

Schließlich können über derartigen glasartigen Schichten weitere, bereits bekannte gefärbte glasartige Schichten vorgesehen werden, zum Beispiel dünne kolloidgefärbte glasartige Schichten. Da derartige gefärbte glasartige Schichten vorzugsweise mit Hilfe von Beschichtungszusammensetzungen hergestellt werden, die zum Beispiel Precursoren für Metallkolloide enthalten, läßt sich dadurch auch verhindern, daß die metallische Oberfläche (bzw. die daraus abgelösten Metallionen) die Reaktionen der Metallkolloid-Precursoren etc. beeinträchtigt bzw. beeinflußt, da kein direkter Kontakt zwischen der metallischen Oberfläche und der gefärbten glasartigen Schicht vorliegt.

Außerdem können zur Herstellung der erfindungsgemäß bereitgestellten Schichten Silane mit fluorhaltigen Seitenketten verwendet werden, was zu einer Niedrigenergieoberfäche führt.

Konkret stellt die vorliegende Erfindung ein Verfahren zum Versehen einer metallischen Oberfläche mit einer glasartigen Schicht bereit, das dadurch gekennzeichnet ist, dass man eine Beschichtungszusammensetzung, die erhältlich ist durch ein Verfahren umfassend die Hydrolyse und Polykondensation eines oder mehrerer Silane der allgemeinen Formel (I)

RₙSiX₄₋ₙ (I)

worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 ist, mit der Maßgabe, dass mindestens ein Silan mit n = 1 oder 2 verwendet **wird, oder davon abgeleiteter Oligomere, in Anwesenheit**
a) mindestens einer Verbindung aus der Gruppe der Oxide und Hydroxide der Alkali- und Erdalkalimetalle
b) und gegebenenfalls nanoskaliger SiO₂-Teilchen
auf die metallische Oberfläche aufbringt und die resultierende Beschichtung, gegebenenfalls (und vorzugsweise) nach vorangehender Trocknung - thermisch zu einer glasartigen Schicht verdichtet.

Unter den oben erwähnten "nanoskaligen SiO₂-Teilchen" werden im vorliegenden Zusammenhang SiO₂-Teilchen mit einer durchschnittlichen Teilchengröße (bzw. einem durchschnittlichen Teilchendurchmesser) von nicht mehr als 200 nm, vorzugsweise nicht mehr als 100 nm und insbesondere nicht mehr als 50 nm verstanden, wobei eine Obergrenze von 30 nm besonders bevorzugt ist.

Im folgenden wird das erfindungsgemäße Verfahren in Einzelheit erläutert.

Unter den obigen Silanen der allgemeinen Formel (I) befindet sich mindestens ein Silan, in dessen Formel n den Wert 1 oder 2 aufweist. In der Regel werden mindestens zwei Silane der allgemeinen Formel (I) in Kombination eingesetzt. In diesem Fall werden diese Silane in einem solchen Verhältnis eingesetzt, daß das Verhältnis R:Si, d.h. der Durchschnittswert von n (auf molarer Basis), 0,2 bis 1,5, vorzugsweise 0,5 bis 1,0, beträgt. Besonders bevorzugt liegt der Durchschnittswert von n im Bereich von 0,6 bis 0,8.

In der allgemeinen Formel (I) sind die Gruppen X, die gleich oder verschieden voneinander sein können, hydrolysierbare Gruppen oder Hydroxylgruppen. Konkrete Beispiele für hydrolysierbare Gruppen X sind Halogenatome (insbesondere Chlor und Brom), Alkoxygruppen und Acyloxygruppen mit bis zu 6 Kohlenstoffatomen. Besonders bevorzugt werden Alkoxygruppen, insbesondere C₁₋₄Alkoxygruppen wie Methoxy, Ethoxy und n- und i-Propoxy. Vorzugsweise sind die Gruppen X in einem konkreten Silan identisch, wobei besonders bevorzugt Methoxy- oder Ethoxygruppen eingesetzt werden.

Bei den Gruppen R in der allgemeinen Formel (I), die im Falle von n = 2 gleich oder identisch sein können, handelt es sich um Wasserstoff, Alkyl-, Alkenyl- und Alkinylgruppen mit bis zu 12 (in der Regel bis zu 8 und vorzugsweise bis zu 4) Kohlenstoffatomen und Aryl-, Aralkyl- und Alkarylgruppen mit 6 bis 10 Kohlenstoffatomen. Konkrete Beispiele für derartige Gruppen sind Methyl, Ethyl, Propyl und Butyl, Vinyl, Allyl und Propargyl, Phenyl, Tolyl, Benzyl und Naphthyl. In der Regel tragen die Gruppen R keine Substituenten. Wie bereits oben erwähnt, kann es jedoch von Vorteil sein, als Gruppen R zumindest teilweise solche einzusetzen, die Fluoratome aufweisen, insbesondere Alkylgruppen und Arylgruppen mit Fluoratomen (vorzugsweise jedoch nicht an C-Atomen, die sich in α- oder β-Stellung zum Si befinden). Die entsprechenden Alkylgruppen weisen vorzugsweise mehr als 3 Kohlenstoffatome auf und sind mit Ausnahme der α- und β-C-Atome vorzugsweise perfluoriert.

Bevorzugte Gruppen R sind (unsubstituierte) Alkylgruppen mit 1 bis 4 Kohlenstoffatomen, insbesondere Methyl und Ethyl, sowie Phenyl; sowie zusätzlich fluorierte Alkylgruppen mit 4 bis 12 Kohlenstoffatomen.

Erfindungsgemäß bevorzugt ist es, wenn mindestens zwei Silane der allgemeinen Formel (I) eingesetzt werden, wobei in mindestens einem Fall n = 0 und im anderen Fall n = 1. Derartige Silan-Mischungen umfassen zum Beispiel mindestens ein Alkyltrialkoxysilan (z.B. (M)ethyltri(m)ethoxysilan) und mindestens ein Tetraalkoxysilan (z.B. Tetra(m)ethoxysilan), die vorzugsweise in einem solchen Verhältnis eingesetzt werden, daß der Durchschnittswert von n in den oben angegebenen bevorzugten Bereichen liegt

Die gemäß einer Variante (b) des erfindungsgemäßen Verfahrens zusätzlich zu den hydrolysierbaren Silanen der allgemeinen Formel (I) verwendeten nanoskaligen SiO₂-Teilchen werden vorzugsweise in einer solchen Menge eingesetzt, daß das Verhältnis aller Si-Atome in den Silanen der allgemeinen Formel (I) zu allen Si-Atomen in den nanoskaligen SiO₂-Teilchen im Bereich von 5:1 bis 1:2, insbesondere von 4:1 bis 2:1, liegt. Derartige nanoskalige SiO₂-Teilchen können beispielsweise in Form von handelsüblichen Kieselsolen (z.B. von der Firma Bayer erhältlich) eingesetzt werden.

Die Hydrolyse und Polykondensation des oder der Silane der allgemeinen Formel (I)wird in Anwesenheit mindestens einer Verbindung aus der Gruppe der Oxide und Hydroxide der Alkali- und Erdalkalimetalle durchgeführt, gegebenenfalls auch in Anwesenheit nanoskaliger SiO₂-Teilchen. Bei diesen Oxiden und Hydroxiden handelt es sich vorzugsweise um solche von Li, Na, K, Mg, Ca und/oder Ba. Besonders bevorzugt werden Alkalimetallhydroxide, insbesondere NaOH und KOH, verwendet. Bei Verwendung eines Alkalimetalloxids bzw. -hydroxids wird dieses vorzugsweise in einer solchen Menge eingesetzt, daß das Atomverhältnis Si:Alkalimetall im Bereich von 20:1 bis 5:1, inbesondere von 15:1 bis 10:1, liegt. In jedem Fall wird das Atomverhältnis von Silicium zu (Erd)alkalimetall so (groß) gewählt, daß der resultierende Überzug im wesentlichen nicht wasserlöslich ist .

Es wird davon ausgegangen, dass beim erfindungsgemäßen Verfahren (im Falle von Variante (b) als solche eingesetzte) nanoskalige SiO₂-Teilchen vorliegen, d.h. sich in situ bilden. Es wird angenommen, dass die Anwesenheit von nanoskaligen Si₂O-Teilchen im Überzug von essentieller Bedeutung für die Erzielung ausreichender Schichtdicken ist. Ebenso wird angenommen, daß die Anwesenheit von Gruppen R in den Ausgangssilanen u.a. dazu dient, eine zu starke Vernetzung des organischen SiO₂ Gerüstes (und damit eine zu starke Versteifung bzw. Versprödung der Schicht) zu verhindern.

Die Hydrolyse und Polykondensation finden offensichtlich im alkalischen Milieu statt, was insbesondere dann von Vorteil ist, wenn gegen Angriff von Säuren nicht oder nur wenig beständige metallische Oberflächen (z.B. aus Stahl) nach dem erfindungsgemäßen Verfahren mit einem glasartigen Überzug versehen werden sollen Ein weiterer Vorteil ist, daß durch den (Erd)alkalianteil die Verdichtung verbessert wird, so daß die Beschichtung z.B. in Luftatmosphäre vorgenommen werden kann, ohne daß die darunterliegende metallische (z.B. Edelstahl-) Oberfläche Schaden nimmt (anläuft). Es gelingt ferner, auch Baustahl (z.B. ST37, ST50) mit einer glasartigen Schicht zu versehen, ohne daß der Stahl beim Verdichten der Schicht anläuft, wenn dies unter Luftabschluß erfolgt (N₂-Atmosphäre).

Die auf die metallische Oberfläche aufgebrachte Beschichtungszusammensetzung wird anschließend thermisch zu einer glasartigen Schicht verdichtet. Vor dieser thermischen Verdichtung wird normalerweise eine herkömmliche Trocknung der Beschichtungszusammensetzung bei Raumtemperatur und/oder leicht erhöhter Temperatur (beispielsweise einer Temperatur von bis zu 100°C, insbesondere bis zu 80°C) durchgeführt.

Obwohl sich die (End)temperatur bei der thermischen Verdichtung auch an der Wärmebeständigkeit der metallischen Oberfläche orientieren muß, liegt diese Temperatur in der Regel bei mindestens 300°C, insbesondere mindestens 400°C und besonders bevorzugt mindestens 500°C. Wenn die metallische Oberfläche insbesondere bei diesen hohen Temperaturen oxidationsempfindlich ist, empfiehlt es sich, die thermische Verdichtung in einer sauerstofffreien Atmosphäre, z.B. unter Stickstoff oder Argon, durchzuführen.

Die nach der thermischen Verdichtung erzielte Dicke der glasartigen Schicht liegt erfindungsgemäß vorzugsweise im Bereich von 1 bis 10 µm, insbesondere 2 bis 7 µm und besonders bevorzugt 3 bis 5 µm.

Wie bereits oben erwähnt, kann auf der nach dem erfindungsgemäßen Verfahren hergestellten (in der Regel transparenten und farblosen) glasartigen Schicht (mindestens) eine weitere (glasartige) Schicht vorgesehen werden, zum Beispiel eine funktionelle glasartige Schicht, wie sie in der internationalen Patentanmeldung PCT/EP94/03423 (entsprechend EP-A-729442) oder in der DE-A-19645043 beschrieben ist.

Derartige weitere Schichten werden zum Beispiel dadurch aufgebracht, daß man eine Zusammensetzung, die erhältlich ist durch Hydrolyse und Polykondensation bestimmter (funktionalisierter) Silane mit mindestens einem Funktionsträger aus der Gruppe der temperaturbeständigen Farbstoffe und Pigmente, Metall- oder Nichtmetalloxide, färbenden Metallionen, Metall- oder Metallverbindungs-Kolloide und Metallionen, die unter Reduktionsbedingungen zu Metallkolloiden reagieren, vermischt, die mit dem Funktionsträger vermischte Zusammensetzung auf die zu beschichtende Oberfläche aufbringt und den Überzug thermisch zu einer (gefärbten) glasartigen Schicht verdichtet. Alternativ kann eine (gefärbte) Schicht vorgesehen werden, indem man eine Beschichtungszusammensetzung, die mindestens ein Element, das ein glasartiges, kristallines oder teilkristallines Oxid bilden kann, in Form einer Verbindung, die bei der thermischen Behandlung dieses Oxid liefern kann und in einem zumindest vorwiegend wäßrigen Medium als Lösung oder Sol vorliegt, als matrixbildende Komponente und mindestens ein Mitglied aus der Gruppe der Metall-, Metallverbindungs- und Metallegierungskolloide und der Metallverbindungen, die unter reduzierenden Bedingungen Metallkolloide bilden können, als farbgebende Komponente enthält, auf die zu beschichtende Oberfläche aufbringt und den resultierenden Überzug thermisch härtet. Als Elemente, die ein glasartiges, kristallines oder teilkristallines Oxid bilden können, können zum Beispiel Ti und Zr genannt werden.

Eine derartige gefärbte glasartige Schicht kann auf der erfindungsgemäß hergestellten glasartigen Schicht z.B. dadurch vorgesehen werden, daß man den erfindungsgemäß auf der metallischen Oberfläche vorgesehenen Überzug vor seiner thermischen Verdichtung (und vorzugsweise nach seiner Trocknung bei Raumtemperatur und/oder erhöhter Temperatur) mit der Beschichtungzusammensetzung für die gefärbte glasartige Schicht versieht und die beiden Überzüge dann gemeinsam thermisch verdichtet. Selbstverständlich ist es auch möglich, farbgebende Komponenten (wie beispielsweise die oben genannten) direkt in die erfindungsgemäß zu verwendende Beschichtungszusammensetzung einzuverleiben, dies ist aber nicht bevorzugt.

Als erfindungsgemäß zu beschichtende metallische Oberfläche eignen sich alle aus einem Metall oder einer Metallegierung bestehenden (bzw. dieses oder diese umfassende) Oberflächen.

Als Beispiele für Metallegierungen wären insbesondere (Edel)stahl, Messing oder Bronze zu nennen, wobei die Beschichtung von Edelstahl erfindungsgemäß besonders bevorzugt wird.

Als Beispiele für metallische Oberflächen können solche aus Aluminium, Zinn, Zink, Chrom oder Nickel (einschließlich verzinkter und verchromter Oberflächen) genannt werden.

Vorzugsweise wird die metallische Oberfläche vor der Auftragung der Beschichtungszusammensetzung gründlich gereinigt (insbesondere von Fett und Staub befreit). Vor der Beschichtung kann auch eine Oberflächenbehandlung (z.B. durch Aufrauhen oder Corona-Entladung) durchgeführt werden, ist erfindungsgemäß jedoch weder erforderlich noch bevorzugt.

Die Hydrolyse und Polykondensation der Silane der allgemeinen Formel (I) kann in Abwesenheit oder Anwesenheit eines organischen Lösungsmittels durchgeführt werden. Vorzugsweise ist kein organisches Lösungsmittel vorhanden. Bei Einsatz eines organischen Lösungsmittels sind die Ausgangskomponenten vorzugsweise im Reaktionsmedium (das in der Regel Wasser einschließt) löslich. Als organische Lösungsmittel eignen sich insbesondere mit Wasser mischbare Lösungsmittel wie beispielsweise ein- oder mehrwertige aliphatische Alkohole (z.B. Methanol, Ethanol), Ether (wie Diethylether), Ester (wie Ethylacetat), Ketone, Amide, Sulfoxide und Sulfone. Diese Lösungsmittel können auch der fertigen Beschichtungszusammensetzung gegebenenfalls zugegeben werden, um eine für die Beschichtung geeignete Viskosität einzustellen.

Im übrigen können die Hydrolyse und Polykondensation gemäß den dem Fachmann geläufigen Modalitäten durchgeführt werden.

Die erfindungsgemäß eingesetzte Beschichtungszusammensetzung kann nach üblichen Beschichtungsmethoden auf die metallische Oberfläche aufgebracht werden. Anwendbare Techniken sind zum Beispiel das Tauchen, Gießen, Schleudern, Aufsprühen oder Aufstreichen. Besonders bevorzugt werden Tauchverfahren.

Anzumerken wäre noch, daß die thermische Verdichtung gegebenenfalls auch durch IR- oder Laser-Strahlung erfolgen kann. Es ist auch möglich, durch selektive Wärmeeinwirkung strukturierte Überzüge herzustellen.

Das erfindungsgemäße Verfahren eignet sich insbesondere - aber nicht ausschließlich - zur Beschichtung von Gegenständen des täglichen Gebrauchs, die eine metallische Oberfläche aufweisen bzw. aus Metall bestehen. So können metallische Oberflächen (z.B. Stahloberflächen) beschichtet werden, wie sie beispielsweise bei Blechen, Eßbestecken, Schüsseln, Ausgüssen, Tür- und Fenstergriffen und dergleichen vorzufinden sind.

Die vorliegende Erfindung stellt ein dekoratives System zur Verfügung, das vorteilhaft auf metallische Oberflächen (z.B. aus (Edel)stahl) aufgetragen werden kann, witterungsbeständig und kratzunempfindlich ist und insbesondere auch Verschmutzungen, z.B. durch Fingerabdrücke usw., vermeiden hilft.

Die folgenden Beispiele erläutern die Erfindung.

### Belspiel 1

### Herstellung eines Natriumsilikat-Beschichtunossols

25 ml (124,8 mMol) Methyltriethoxysilan (MTEOS) werden mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt.

Anschließend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengröße von 0,8 µm filtriert.

### Beispiel 2

### Herstellung eines Kaliumsilikat-Beschichtungssols

Beispiel 1 wird wiederholt, jedoch werden anstelle von 0,8 g Natriumhydroxid 0,8 g (12,1 mMol) Kaliumhydroxid eingesetzt.

### Beispiel 3

Gereinigte Substrate (Edelstahl 1.4301, Messing und Aluminium) wurden mit einer Ziehgeschwindigkeit von 4 - 6 mm/s mit den in den Beispielen 1 bis 2 beschriebenen Beschichtungszusammensetzungen tauchbeschichtet, kurz (10 Minuten) bei Raumtemperatur vorgetrocknet und anschließend 1 Stunde bei 80°C getrocknet. Zum Verdichten wurden die getrockneten Substrate an Luft (bzw. unter Stickstoff im Fall der Beschichtung von Edelstahl mit der Beschichtungszusammensetzung aus Beispiel 1) mit einer Heizrate von 1K/Minute auf 500°C (bzw. 400°C im Fall von Aluminium) erhitzt und 1 Stunde bei dieser Temperatur gehalten.

Die Schichtdicken nach dem Verdichten betrugen 2 bis 4 µm. HREM-Untersuchungen der Beschichtungen auf Stahl und Aluminium zeigten eine defektfreie Schicht.

Das Anlaufen des Edelstahls beim Verdichten konnte durch die Beschichtung fast vollständig verhindert werden. Außerdem zeigte die Schicht selbst nach 1000 Stunden im Salznebel-Sprühtest noch keinerlei Beschädigungen.

Das beschichtete Messing und Aluminium zeigten nach 3000-stündigem Korrosionstest in der Salzsprühnebelkammer (DIN 50021) keinerlei Korrosionsschäden, während der nicht beschichtete Teil vollständig korrodiert war.

### Beispiel 4

### Alkalisch hydrolysiertes System mit 11 Mol-% FTS

Es werden 0,1 Mol(17,9 g) MTEOS, 0,027 Mol (5,6 g) TEOS und 0,016 Mol (8,16 g; 11 Mol-% bezogen auf Si) FTS in einer geeigneten Schott-Flasche vorgelegt Anschließend werden unter Rühren 0,018 Mol NaOH (0,72 g) zugesetzt und für ca. 16 Stunden gerührt. Danach werden zu der inzwischen gelb gefärbten Lösung tropfenweise 0,15 Mol (2,7 g) H₂O gegeben. Nach beendeter Zugabe wird noch für etwa 30 Minuten gerührt. Abschließend wird mit 35 g Ethanol verdünnt und durch einen 1 µm-Filter mittels Druckfiltration filtriert.

Das fertige Sol wird mittels Sprühbeschichtung auf eine Edelstahlplatte aufgetragen und bei 350°C unter Luftatmosphäre ausgehärtet. Bei diesem System unterbleibt die ansonsten beobachtete Verfärbung von Edelstahlsubstraten bei diesen Temperaturen. Die Schicht ist vollständig transparent und zeigt Kontaktwinkel gegen Wasser von 95° und gegen Hexadecan von 40°.

## Patentansprüche

1. Verfahren zum Versehen einer metallischen Oberfläche mit einer glasartigen Schicht, **dadurch gekennzeichnet, dass** man eine Beschichtungszusammensetzung, die erhältlich ist durch ein Verfahren umfassend die Hydrolyse und Polykondensation eines oder mehrerer Silane der allgemeinen Formel (I)
RₙSiX₄₋ₙ (I)
worin die Gruppen X, gleich oder verschieden voneinander, hydrolysierbare Gruppen oder Hydroxylgruppen sind, die Reste R, gleich oder verschieden voneinander, für Wasserstoff, Alkyl-, Alkenyl- und Alkinylgruppen mit bis zu 12 Kohlenstoffatomen und Aryl-, Aralkyl- und Alkarylgruppen mit 6 bis 10 Kohlenstoffatomen stehen und n 0, 1 oder 2 bedeutet, mit der Maßgabe, dass mindestens ein Silan mit n = 1 oder 2 verwendet wird, oder davon abgeleiteter Oligomere, in Anwesenheit
a) mindestens einer Verbindung aus der Gruppe der Oxide und Hydroxide der Alkali- und Erdalkalimetalle und gegebenenfalls
b) nanoskaliger SiO₂-Teilchen
auf die metallische Oberfläche aufbringt und die resultierende Beschichtung thermisch zu einer glasartigen Schicht verdichtet.

2. Verfahren nach Anspruch 1, **dadurch gekennzeichnet, dass** der Durchschnittswert von n in den Ausgangssilanen der allgemeinen Formel (I) 0,2 bis 1,5, insbesondere 0,5 bis 1,0, beträgt.

3. Verfahren nach irgendeinem der Ansprüche 1 und 2, **dadurch gekennzeichnet, dass** in den Ausgangssilanen der allgemeinen Formel (I) X für Alkoxy, insbesondere C₁₋₄-Alkoxy, steht.

4. Verfahren nach Anspruch 3, **dadurch gekennzeichnet, dass** X für Methoxy oder Ethoxy steht.

5. Verfahren nach irgendeinem der Ansprüche 1 bis 4, **dadurch gekennzeichnet, dass** R für C₁₋₄-Alkyl, insbesondere Methyl oder Ethyl, oder Phenyl steht.

6. Verfahren nach irgendeinem der Ansprüche 1 bis 5, **dadurch gekennzeichnet, dass** als Ausgangssilane der Formel (I) Methyltri(m)ethoxysilan und Tetra(m)ethoxysilan in Kombination eingesetzt werden.

7. Verfahren nach irgendeinem der Ansprüche 1 bis 6, **dadurch gekennzeichnet, dass** mindestens eines der eingesetzten Ausgangssilane der allgemeinen Formel (I) einen fluorierten Rest R aufweist.

8. Verfahren nach irgendeinem der Ansprüche 1 bis 7, **dadurch gekennzeichnet, dass** die nanoskaligen SiO₂-Teilchen in einer solchen Menge eingesetzt werden, dass das Verhältnis aller Si-Atome in den Ausgangssilanen der Formel (I) zu allen Si-Atomen in den SiO₂-Teilchen im Bereich von 5:1 bis 1:2, insbesondere von 4:1 bis 2:1, liegt.

9. Verfahren nach irgendeinem der Ansprüche 1 bis 8, **dadurch gekennzeichnet, dass** die mindestens eine Verbindung aus der Gruppe der Oxide und Hydroxide der Alkali- und Erdalkalimetalle mindestens ein Oxid bzw. Hydroxid von Li, Na, K, Mg, Ca oder Ba umfasst.

10. Verfahren nach Anspruch 9, **dadurch gekennzeichnet, dass** die Verbindung aus Natriumhydroxid und Kaliumhydroxid ausgewählt wird.

11. Verfahren nach irgendeinem der Ansprüche 1 bis 10, **dadurch gekennzeichnet, dass** das Alkalimetalloxid bzw. -hydroxid in einer solchen Menge eingesetzt wird, dass das Atomverhältnis Si:Alkalimetall im Bereich von 20:1 bis 5:1, insbesondere von 15:1 bis 10:1, liegt.

12. Verfahren nach irgendeinem der Ansprüche 1 bis 11, **dadurch gekennzeichnet, dass** die auf die metallische Oberfläche aufgebrachte Beschichtungszusammensetzung vor der thermischen Verdichtung getrocknet wird.

13. Verfahren nach irgendeinem der Ansprüche 1 bis 12, **dadurch gekennzeichnet, dass** die thermische Verdichtung bei Temperaturen von mindestens 400°C , vorzugsweise mindestens 500°C, erfolgt.

14. Verfahren nach irgendeinem der Ansprüche 1 bis 13, **dadurch gekennzeichnet, dass** die Schichtdicke nach der thermischen Verdichtung 1 bis 10 um, vorzugsweise 2 bis 7 um, beträgt.

15. Verfahren nach irgendeinem der Ansprüche 1 bis 14, **dadurch gekennzeichnet, dass** nach der Trocknung oder thermischen Verdichtung des Überzugs mindestens eine weitere Beschichtungszusammensetzung, die bei der thermischen Verdichtung zu einer gefärbten glasartigen Schicht führt, aufgebracht und thermisch verdichtet wird.

16. Verfahren nach irgendeinem der Ansprüche 1 bis 15, **dadurch gekennzeichnet, dass** es sich bei der metallischen Oberfläche um eine solche aus einer Metalllegierung, insbesondere aus (Edel)stahl, Messing oder Bronze, handelt.

17. Verfahren nach irgendeinem der Ansprüche. 1 bis 16, **dadurch gekennzeichnet, dass** es sich bei der metallischen Oberfläche um eine solche aus Aluminium, Zinn, Zink, Chrom oder Nickel handelt.

18. Verfahren nach irgendeinem der Ansprüche 1 bis 17, bei dem Bleche oder Essbestecke, Kochgeschirr, Ausgüsse oder Tür- und Fenstergriffe mit einer glasartigen Beschichtung versehen werden.

19. Gegenstände mit einer nach dem Verfahren gemäß irgendeinem der Ansprüche 1 bis 18 mit einer glasartigen Schicht versehenen metallischen Oberfläche.

## Claims

1. A process for providing a metallic surface with a vitreous layer, **characterized in that** a coating composition which is obtainable by a process comprising the hydrolysis and polycondensation of one or more silanes of the general formula (I)
RₙSiX₄₋ₙ (I)
wherein the groups X, the same or different from each other, are hydrolyzable groups or hydroxyl groups, the radicals R, the same or different from each other, represent hydrogen, alkyl, alkenyl or alkynyl groups having up to 12 carbon atoms and aryl, aralkyl and alkaryl groups having 6 to 10 carbon atoms, and n is 0, 1 or 2, provided that at least one silane with n = 1 or 2 is employed, or oligomers derived therefrom, in the presence of
a) at least one compound selected from the group consisting of oxides and hydroxides of the alkali and alkaline earth metals, and optionally,
b) nanoscaled SiO₂ particles
is applied onto said metallic surface and the resulting coating is thermally densified to form a vitreous layer.

2. A process according to claim 1, **characterized in that** the average value of n in the starting silanes of the general formula (I) ranges from 0.2 to 1.5, particularly from 0.5 to 1.0.

3. A process according to any one of claims 1 and 2, **characterized in that** in the starting silanes of general formula (I) X represents alkoxy, particularly C₁₋₄ alkoxy.

4. A process according to claim 3, **characterized in that** X is methoxy or ethoxy.

5. A process according to any one of claims 1 to 4, **characterized in that** R represents C₁₋₄ alkyl, particularly methyl or ethyl, or phenyl.

6. A process according to any one of claims 1 to 5, **characterized in that** (m)ethyltri(m)ethoxy silane and tetra(m)ethoxy silane are used in combination as starting silanes of formula (I).

7. A process according to any one of claims 1 to 6, **characterized in that** at least one of the starting silanes of general formula (I) employed has a fluorinated radical R.

8. A process according to any one of claims 1 to 7, **characterized in that** the nanoscaled SiO₂ particles are employed in such an amount that the ratio of total Si-atoms in the starting silanes of formula (I) to total Si-atoms in the SiO₂ particles ranges from 5:1 to 1:2, particularly from 4:1 to 2:1.

9. A process according to any one of claims 1 to 8, **characterized in that** said at least one compound selected from the group consisting of oxides and hydroxides of the alkali and alkaline earth metals comprises at least one oxide or hydroxide, respectively, of Li, Na, K, Mg, Ca or Ba.

10. A process according claim 9, **characterized in that** said compound is selected from sodium hydroxide and potassium hydroxide.

11. A process according to any one of claims 1 to 10, **characterized in that** said alkali metal oxide or hydroxide, respectively, is employed in such an amount that the atomic ratio Si : alkali metal ranges from 20:1 to 5:1, particularly from 5:1 to 10:1.

12. A process according to any one of claims 1 to 11, **characterized in that** the coating composition applied on the metallic surface is dried prior to its thermal densification.

13. A process according to any one of claims 1 to 12, **characterized in that** said thermal densification is carried out at temperatures of at least 400°C, preferably at least 500°C.

14. A process according to any one of claims 1 to 13, **characterized in that** the thickness of the layer after the thermal densification ranges from 1 to 10 µm, preferably from 2 to 7 µm.

15. A process according to any one of claims 1 to 14, **characterized in that** after the drying or thermal densification of the coating at least one further coating composition which upon thermal densification results in a colored vitreous layer is applied and thermally densified.

16. A process according to any one of claims 1 to 15, **characterized in that** said metallic surface is one of a metal alloy, particularly of (stainless) steel, brass or bronze.

17. A process according to any one of claims 1 to 15, **characterized in that** said metallic surface is one of aluminium, tin, zinc, chromium or nickel.

18. A process according to any one of claims 1 to 17, wherein panels or cuttlery, cooking utensils, sinks or door and window handles are provided with a vitreous layer.

19. Articles featuring a metallic surface which is provided with a vitreous layer according to the process of any one of claims 1 to 18.

## Revendications

1. Procédé permettant de munir une surface métallique d'une couche vitreuse, **caractérisé en ce que** l'on applique sur la surface métallique une composition de revêtement que l'on peut obtenir au moyen d'un procédé comprenant l'hydrolyse et la polycondensation d'un ou de plusieurs silanes de formule générale (I):
RₙSiX₄₋ₙ (I)
dans laquelle les groupes symbolisés par X sont identiques ou différents et représentent des groupes hydrolysables ou des groupes hydroxy, les groupes symbolisés par R sont identiques ou différents et représentent des atomes d'hydrogène, des groupes alkyle, alcényle ou alcynyle comportant jusqu'à 12 atomes de carbone, ou des groupes aryle, aralkyle ou alkaryle de 6 à 10 atomes de carbone, et n vaut 0, 1 ou 2, à la condition d'utiliser au moins un silane où n est égal à 1 ou 2, ou des oligomères dérivés de tels silanes, en présence
a) d'au moins un composé choisi parmi les oxydes et les hydroxydes des métaux alcalins et des métaux alcalino-terreux et, le cas échéant,
b) de particules de SiO₂ de l'ordre de grandeur du nanomètre,
et l'on transforme le revêtement résultant en une couche vitreuse en le faisant durcir à chaud.

2. Procédé selon la revendication 1, **caractérisé en ce que**, dans les silanes de départ de formule générale (I), n a une valeur moyenne de 0,2 à 1,5, en particulier, de 0,5 à 1,0.

3. Procédé selon l'une quelconque des revendications 1 et 2, **caractérisé en ce que**, dans les silanes de départ de formule générale (I), X désigne un groupe alcoxy, en particulier, un groupe alcoxy en C₁ à C₄.

4. Procédé selon la revendication 3, **caractérisé en ce que** X désigne un groupe méthoxy ou éthoxy.

5. Procédé selon l'une quelconque des revendications 1 à 4, **caractérisé en ce que** R désigne un groupe phényle ou un groupe alkyle en C₁ à C₄, en particulier, un groupe méthyle ou éthyle.

6. Procédé selon l'une quelconque des revendications 1 à 5, **caractérisé en ce que** l'on utilise comme silanes de départ de formule (I), du méthyltriméthoxysilane ou du méthyltriéthoxysilane et du tétraméthoxysilane ou du tétraéthoxysilane, sous forme de combinaison.

7. Procédé selon l'une quelconque des revendications 1 à 6, **caractérisé en ce qu'**au moins un des silanes de formule générale (I) utilisé au départ comporte un groupe symbolisé par R qui est un groupe fluoré.

8. Procédé selon l'une quelconque des revendications 1 à 7, **caractérisé en ce que** l'on utilise les particules de SiO₂ de l'ordre de grandeur du nanomètre en une quantité telle que le rapport de tous les atomes de Si des silanes de départ de formule (1) à tous les atomes de Si des particules de SiO₂ est compris dans l'intervalle allant de 5/1 à 1/2, en particulier, de 4/1 à 2/1.

9. Procédé selon l'une quelconque des revendications 1 à 8, **caractérisé en ce que** le composé au nombre d'au moins un, choisi parmi les oxydes et les hydroxydes des métaux alcalins et des métaux alcalino-terreux, comprend au moins un oxyde ou un hydroxyde de Li, Na, K, Mg, Ca ou Ba.

10. Procédé selon la revendication 9, **caractérisé en ce que** le composé est de l'hydroxyde de sodium ou de l'hydroxyde de potassium.

11. Procédé selon l'une quelconque des revendications 1 à 10, **caractérisé en ce que** l'on utilise l'oxyde de métal alcalin ou l'hydroxyde de métal alcalin en une quantité telle que le rapport des atomes de Si aux atomes de métal alcalin est compris dans l'intervalle allant de 20/1 à 5/1, en particulier, de 15/1 à 10/1.

12. Procédé selon l'une quelconque des revendications 1 à 11, **caractérisé en ce que** l'on fait sécher la composition de revêtement appliquée sur la surface métallique, avant le durcissement à chaud.

13. Procédé selon l'une quelconque des revendications 1 à 12, **caractérisé en ce que** le durcissement à chaud est réalisé à une température valant au moins 400°C et de préférence au moins 500°C.

14. Procédé selon l'une quelconque des revendications 1 à 13, **caractérisé en ce que**, après durcissement à chaud, l'épaisseur de couche vaut 1 à 10 µm et de préférence 2 à 7 µm.

15. Procédé selon l'une quelconque des revendications 1 à 14, **caractérisé en ce que**, après séchage ou durcissement à chaud du revêtement, on dépose et on fait durcir à chaud au moins une composition de revêtement supplémentaire, qui produit une couche vitreuse colorée par durcissement à chaud.

16. Procédé selon l'une quelconque des revendications 1 à 15, **caractérisé en ce que** la surface métallique est une surface en alliage métallique, en particulier, en acier, acier spécial, laiton ou bronze.

17. Procédé selon l'une quelconque des revendications 1 à 16, **caractérisé en ce que** la surface métallique est une surface en aluminium, étain, zinc, chrome ou nickel.

18. Procédé selon l'une quelconque des revendications 1 à 17, permettant de munir des tôles ou des couverts, des batteries de cuisine, des éviers ou des poignées de porte ou de fenêtre, d'un revêtement vitreux.

19. Objet comportant une surface métallique munie d'une couche vitreuse au moyen d'un procédé selon l'une quelconque des revendications 1 à 18.
